# EUROPEAN PATENT APPLICATION

(11) **EP 2 911 046 A1**
(43) Date of publication of application: **26.08.2015**
(21) Application number: 13849680.7
(22) Date of filing: 14.06.2013
(51) Int. Cl.: G06F 3/048, G06F 3/0485, G06F 15/02

(54) **DEVICE FOR PROCESSING INFORMATION, AND METHOD AND PROGRAM FOR MANAGING CHRONOLOGICAL INFORMATION**

(30) Priority: 22.10.2012 JP 2012232692
(71) Applicant: NEC Corporation, Tokyo 108-8001 (JP)
(72) Inventor: MUKAI, Yoshitaka, Kawasaki-shi Kanagawa 211-8666 (JP); TANAKA, Aki, Kawasaki-shi Kanagawa 211-8666 (JP)
(74) Representative: Vossius & Partner Patentanwälte Rechtsanwälte mbB
(86) International application number: PCT/JP2013/003741
(87) International publication number: WO 2014/064863

(57) **Abstract**

**[PROBLEM TO BE SOLVED]** Past items and future items can be browsed at one time, and the convenience of item management can be improved.

**[SOLUTION]** An information terminal device 50 comprises a presentation section 51, a prompt detection section 52, and a control section 53. In the presentation section 51, past items and future items with each of which a piece of time information is associated are arranged and presented in chronological sequence on respective regions divided by using a current time display column indicating a current time as a border, based on the respective pieces of time information. The prompt detection section 52 detects a prompt for controlling the past items and the future items. When a prompt has been detected by the prompt detection section 52, the control section 53 controls the way of registration, deleting, shifting, editing and presenting the future item and the past item.

## Description

### TECHNICAL FIELD

The present invention relates to a device for processing information, and a method and a program for managing chronological information.

### BACKGROUND ART

Conventionally, in an information processing device, such as a mobile phone, a smart phone and a PDA (Personal Digital Assistant), a function has been known in which, for example, plural types of contents, such as transmission/reception mails (transmission/ reception time and date, mails, unread/read mails), photographed images (photographed time and date, photographed location, or the like), schedules (time and date, event contents, locations, or the like), (missed) incoming calls (incoming time and date, caller information) or outgoing calls (outgoing time and date, partner information) are presented in chronological sequence.

For example, in Patent Documents 1 to 5, techniques have been proposed in which transmission/reception mails (transmission/reception time and date, unread/read mails), photographed images (photographed time and date, photographed location, or the like), schedules (time and date, event contents, or the like), (missed) incoming calls (incoming time and date, caller information) or the like are displayed on a calendar or a time line.

### PRIOR ART DOCUMENTS

### PATENT DOCUMENTS

Patent Document 1: JP 2009-048310
Patent Document 2: JP 2007-082190
Patent Document 3: JP 2007-299296
Patent Document 4: JP 2005-250605
Patent Document 5: JP 2001-202340

### SUMMARY OF INVENTION

### Problem to be Solved by the Invention

However, in such conventional technologies as the above-described Patent Documents 1 to 5, there are a function for browsing past items that occurred in the past from the current point of time and a function for displaying future items that will occur in the future from the current point of time on a calendar or a time line, whereas, in the case where a future item has become a past item with elapsed time, or in the case where (an event or the like of) a past item has not been actually executed, there is no user-friendly and integrated function for carrying out an item management in such a manner as to execute an appropriate process on the past item or the future item. For this reason, there has been a problem in which the user has to carry out bothersome operations, such as deletion of the past item, resetting, retrieving and the like.

Therefore, an object of the present invention is to provide an information processing device, and a method and a program for managing chronological information by which past items and future items can be browsed at one time and the convenience of the item management can be improved.

### Means for Solving the Problem

The information terminal device of the present invention is an information terminal device comprising: a presentation section for arranging and presenting future items and past items with each of which a piece of time information is associated in chronological sequence on respective regions divided by using a current time display column indicating a current time as a border, based on the respective pieces of time information; a prompt detection section for detecting a prompt for controlling the future items and the past items; and a control section for controlling a way of registering, deleting, shifting, editing and presenting the future items and the past items when a prompt is detected by the prompt detection section.

The method for managing chronological information of the present invention is a method for managing chronological information comprising: a step of arranging and presenting future items and past items with each of which a piece of time information is associated in chronological sequence on respective regions divided by using a current time display column indicating a current time as a border, based on the respective pieces of time information; a step of detecting a prompt for controlling the future items and the past items; and a step of controlling a way of registering, deleting, shifting, editing and presenting the future items and the past items when the prompt is detected.

The program of the present invention is a program that causes a computer to actualize functions comprising: a presenting function for arranging and presenting future items and past items with each of which a piece of time information is associated in chronological sequence on respective regions divided by using a current time display column indicating a current time as a border, based on the respective pieces of time information; a prompt detecting function for detecting a prompt for controlling the future items and the past items; and a controlling function to control a way of registering, deleting, shifting, editing and presenting the future items and the past items when the prompt is detected.

### Effect of the Invention

According to the present invention, past items and future items can be browsed at one time and also the convenience of the item management can be improved.

### BRIEF DESCRIPTION OF DRAWINGS

FIG. 1 is a block diagram illustrating a configuration of an information processing device 1 according to an embodiment of the present invention;
FIG. 2 is a flowchart to describe the operation (item displaying operation) of the information processing device 1 according to the present embodiment;
FIGs. 3(a) and 3(b) are schematic views illustrating one example of an item display screen in the information processing device 1 according to the present embodiment;
FIGs. 4(a) and 4(b) are schematic views illustrating one example of a screen in a scrolling operation in the information processing device 1 according to the present embodiment;
FIG. 5 is a schematic view illustrating one example of a screen at the time of informing a future item in the information processing device 1 according to the present embodiment;
FIG. 6 is a flowchart to describe an item managing operation of the information processing device 1 according to the present embodiment;
FIG. 7 is a flowchart to describe the item managing operation of the information processing device 1 according to the present embodiment;
FIG. 8 is a schematic view illustrating one example of a screen at the time of the item managing operation of the information processing device 1 according to the present invention;
FIGs. 9(a) and 9(b) are schematic views illustrating another example of the screen at the time of the item managing operation of the information processing device 1 according to the present invention; and
FIG. 10 is a configuration diagram of Supplementary Note 1.

### DESCRIPTION OF EMBODIMENTS

Hereinafter, the embodiment of the present invention will be described referring to the drawings.

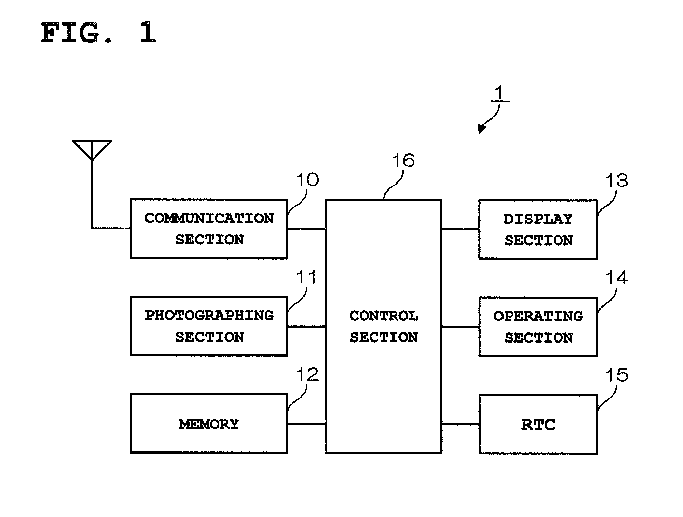

FIG. 1 is a block diagram illustrating a configuration of an image processing device 1 according to an embodiment of the present invention. In the diagram, the image processing device 1 is constituted by a communication section 10, a photographing section 11, a memory 12, a display section 13, an operating section 14, an RTC (Real Time Clock) 15, and a control section 16. The communication section 10 carries out data communications including voice communications and mail transmitting/receiving operations. The photographing section 11 photographs still images and moving images. The memory 12, which is constituted by a RAM (Random Access Memory), ROM (Read Only Memory) or the like, holds programs and various data for use in controlling operations of the device, or address books, schedules, various contents (mails, still images, moving images, files downloaded through the network, etc.) and the like. Note that the above-described ROM and RAM may be a rewritable non-volatile memory such as a flash memory.

The display section 13, which is constituted by a liquid-crystal display device, an organic EL (Electro Luminescence) display section, or the like, displays various pieces of information, particularly in the present embodiment, items such as schedules and events, in chronological sequence according to the control of the control section 16. Note that the items refer to items that are subjected to a time-line function, and include, for example, the user's call history, pictures photographed by the user, mails addressed to the user, posts written by the user' s acquaintances, schedules of the user, and other schedule information. Moreover, an item given in the past relative to the current time is referred to as a past item, and an item which relates to the future is referred to as a future item. Therefore, for each item, at least its time information is held in association therewith. The operating section 14 is constituted by various key switches for use in inputting operations and data to the device. Note that the operating section 14 may be a touch panel arranged on the screen of the display section 13, and a touch operation by a user's finger, a pen, or the like may be detected. The RTC 15 counts the current time.

The control section 16 controls operations of the device by executing a predetermined program held in the memory 12. In particular, in the present embodiment, the control section 16 provides the past items and the future items (call history, mail history, photographing history, schedules, etc.) at one time in chronological sequence. More specifically, the control section 16 displays the future items and the past items in chronological sequence such that the future items and the past items are divided above and below the current time display column indicating the current time. For example, the past item is displayed on the lower side of the current time display column, and the future item is displayed on the upper side of the current time display column.

In other words, by altering the display position of the current time display column for displaying the current time as appropriate, based on the current time, the control section 16 always arranges the past items and the future items above and below in chronological sequence. In contrast, the past items may be displayed on the upper side of the current time display column and the future items may be displayed on the lower side of the current time display column. Additionally, those items relating to the user himself or herself may be displayed on the left side, and those items relating to persons other than the user or general items may be displayed on the left side.

Moreover, in the case when, upon displaying the past items and the future items, the current time display column has reached the end of the screen by the scrolling operation by the user, the control section 16 controls the display on the display section 13 such that the current time display column is kept at the end position while allowing the other information to be scrolled, whereby the current time display column is always left on the screen. Moreover, when the current time has reached time associated with any one of the future items, the control section 16 controls the process relating to the future item (shift of the future item to the past items, registration of the future item as a past item, deletion of the item, setting of alarm, presentation of a link destination relating to the item contents, etc.).

Furthermore, when selection information (such as calling later, or giving a return mail later) is given by the user (or may be automatically selected) to a specific past item (missed incoming mail, received mail and the like), the control section 16 registers the information as a future item to be carried out after a predetermined period of time (30 minutes later, or the like). Furthermore, in a state where only the current time and the past items are displayed on the display screen of the display section 13 (that is, in a state where the current time display column is fixed to the end of the display screen), the control section 16 retrieves whether or not there is a future item that is scheduled within a predetermined period of time; and, if the such a future item exists, the control section 16 displays this fact. Note that, upon displaying the past items and the future items, the control section 16 may display information relating to the user himself or herself and the other information in a divided manner on the display section 13 (for example, the information relating to the user himself or herself may be displayed on the left side, and the information relating persons other than the user may be displayed on the right side).

Next, the operation of the above-described embodiment is described.

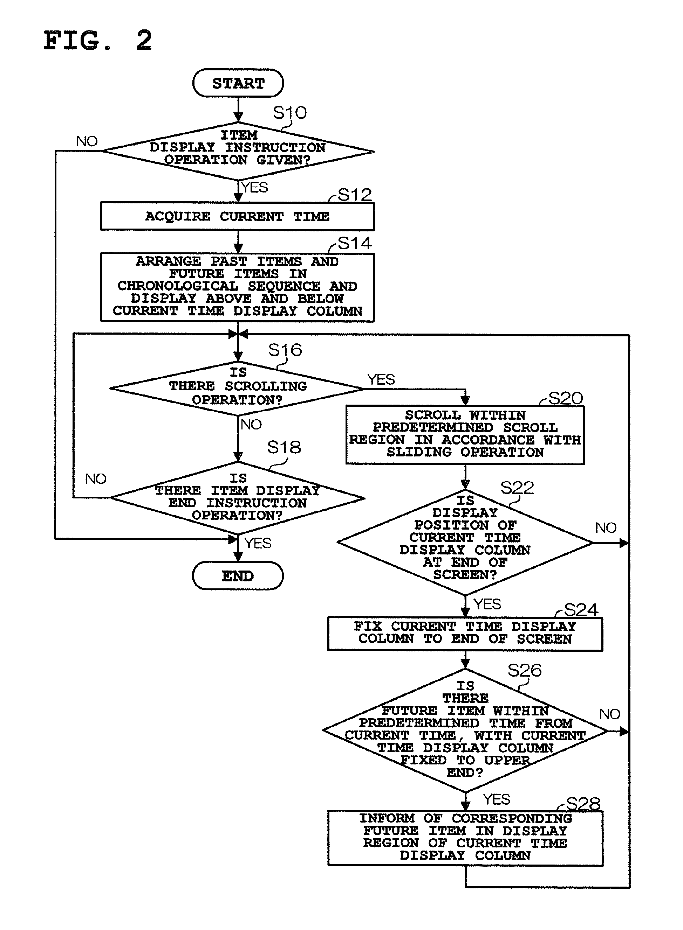

FIG. 2 is a flowchart to describe the operation (item displaying operation) of the information processing device 1 according to the present embodiment. First, the control section 16 judges whether or not an item displaying instruction operation is given from the operating section 14 by the user (Step S10). Then, if no item displaying instruction operation is given by the user (NO in Step S10), the control section 16 ends the processing. On the other hand, if an item displaying instruction operation is given by the user (YES in Step S10), the control section 16 acquires the current time from the RTC 15 (Step S12). Next, the control section 16 arranges past items and future items in chronological sequence and displays on the display section 13, above and below the current time display column for displaying the current time (Step S14). In this case, it is assumed that the future items are displayed on the upper side of the current time display column and the past items are displayed on the lower side thereof. Additionally, the arrangement at the previous item display time may be preliminarily held, and the display may be given by using the arrangement.

Next, the control section 16 judges whether or not a scrolling operation is carried out by the user through a touch operation via the operating section 14 (Step S16). Then, if there is no scrolling operation (NO in Step S16), the control section 16 judges whether or not an item display end instruction operation is given by the user from the operating section 14 (Step S18). In the case when the item display end instruction operation is not given by the user (NO in Step S18), the control section 16 returns to Step S16. In contrast, in the case when the item display end instruction operation is given by the user (YES in Step S18), the control section 16 ends the processing by, for example, deleting the display of the display section 13.

On the other hand, if there is a scrolling operation (YES in Step S16), by using a predetermined scrolling region of the display section 13, the control section 16 causes items (current time display column, past items and future items), which are arranged and displayed in chronological sequence, to be scrolled in accordance with a sliding operation (amount of a sliding operation, sliding speed, sliding direction or the like) (Step S20). This scrolling operation is controlled in accordance with the display position of the current time display column. This will be described further below in detail.

Next, the control section 16 judges whether or not the display position of the current time display column is at the end of the screen (upper end or lower end) (Step S22). Then, if the display position of the current time display column is not at the end of the screen (upper end or lower end)(NO in Step S22), the control section 16 returns to Step S16, and continues the scrolling operation. In this case, by using the entire display region of the display section 13, the control section 16 causes the current time display column, the past items and the future items to be scrolled.

On the other hand, if the display position of the current time display column has reached the end of the screen (upper end or lower end), as a result of scrolling (YES in Step S22), the control section 16 fixes the display position of the current time display column to the end of the screen (Step S24). That is, in the case when the display position of the current time display column has reached the upper end, the control section 16 fixes the display position of the current time display column to the upper end of the screen; while, in the case when the display position of the current time display column has reached the lower end, the control section 16 fixes the display position of the current time display column to the lower end of the screen.

Next, the control section 16 judges whether or not there is a future item within a predetermined time range from the current time, with the display position of the current time display column being at the upper end of the screen (Step S26). Then, if the display position of the current time display column is not at the upper end of the screen, or if the display position of the current time display column is at the upper end of the screen, but no future item exists within the predetermined time range from the current time (NO in Step S26), the control section 16 returns to Step S16, and continues the scrolling operation.

In this manner, in the case when the display position of the current time display column is at the upper end of the screen, but no future item exists within the predetermined time range from the current time, all the lower side of the current time display column forms the display region of past items. Therefore, in this case, with the current time display column being fixed to the upper end, by using a display region except for the display region of the current time display column fixed to the upper end of the screen as a scrolling region, the past items arranged and displayed in chronological sequence are scrolled in accordance with a sliding operation (amount of a sliding operation, sliding speed, sliding direction or the like).

Moreover, in the case when the display position of the current time display column is not at the upper end of the screen, that is, in the case when it is at the lower end of the screen, all the upper side of the current time display column forms the display region of future items. Therefore, in this case, with the current time display column being fixed to the lower end, by using a display region except for the display region of the current time display column fixed to the lower end of the screen as a scrolling region, the future items arranged and displayed in chronological sequence are scrolled in accordance with a sliding operation (amount of a sliding operation, sliding speed, sliding direction or the like).

On the other hand, in the case when there is a future item within the predetermined time range from the current time, with the display position of the current time display column being at the upper end of the screen (YES in Step S26), the control section 16 informs in the display region of the current time display column that the future item exists (Step S28). That is, in this case, the current time display column is fixed to the upper end of the screen; and, the past items arranged and displayed in chronological sequence are scrolled in a scrolling region except for the current time display column. For this reason, the future items are not displayed on the screen of the display section 13. Therefore, by informing the user of the fact that there is a future item in the display region of the current time display column, the user is allowed to recognize that the future item exists. Thereafter, the control section 16 returns to Step S14, and continues the scrolling operation.

In this case, with the current time display column being fixed to the upper end, by using a display region except for the display region of the current time display column fixed to the upper end of the screen 13 as a scrolling region, the past items arranged and displayed in chronological sequence are scrolled in accordance with a sliding operation (amount of a sliding operation, sliding speed, sliding direction or the like).

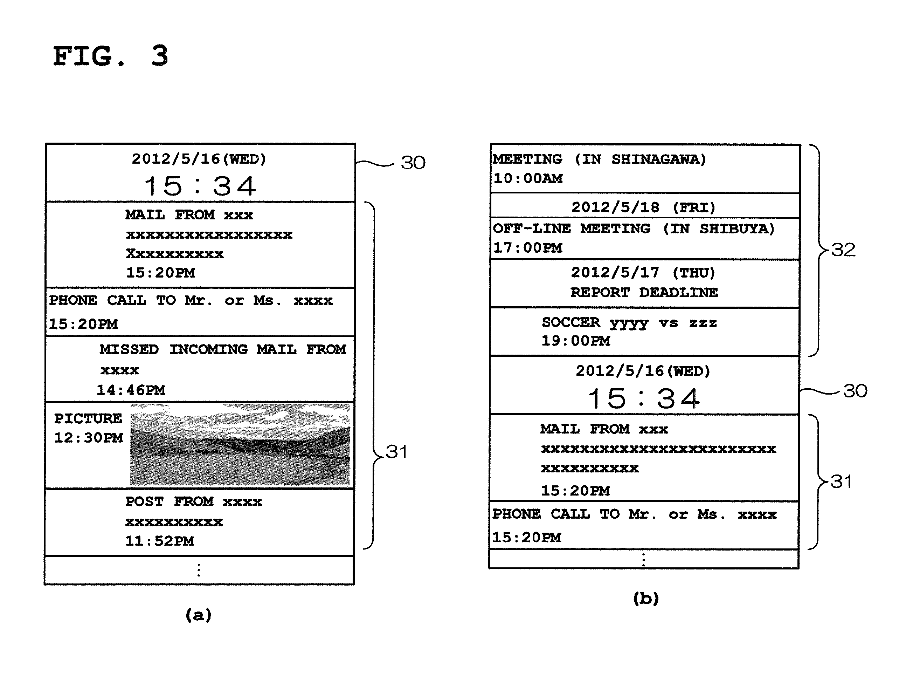

FIGs. 3(a) and 3(b) are schematic views illustrating one example of the item display screen in the information processing device 1 according to the present embodiment. In FIG. 3(a), a current time display column 30 is displayed on the uppermost end, and past items 31 are displayed on the lower side in chronological sequence. As the past items 31, in the order close to the current time (15:34), an incoming mail (15:20 PM), an outgoing history (phone call to Mr. or Ms. xxxx, 15:20 PM), a missed incoming call (14:46 PM), photographing (12:30 PM), a posting history (11:52 PM), ..., etc. are displayed. Additionally, on the column of photographed pictures, thumbnails of the photographed pictures are also displayed.

Moreover, in FIG. 3(b), the current time display column 30 is displayed approximately in the center. In this case, on the lower side of the current time display column 30, in the same manner as in FIG. 3(a), past items 31 are displayed in chronological sequence; and, on the upper side of the current time display column 30, future items 32 are displayed in chronological sequence. As the future items 32, in an order close to the current time (15:34), an event (soccer yyy vs. zzz, 19:00 PM), a schedule (report deadline; 2012/5/17 (Thu), a schedule (off-line meeting (in Shibuya), 2012/5/18 (Fri), 17:00 PM) and a schedule (meeting (in Shinagawa), 10:00 AM) are displayed.

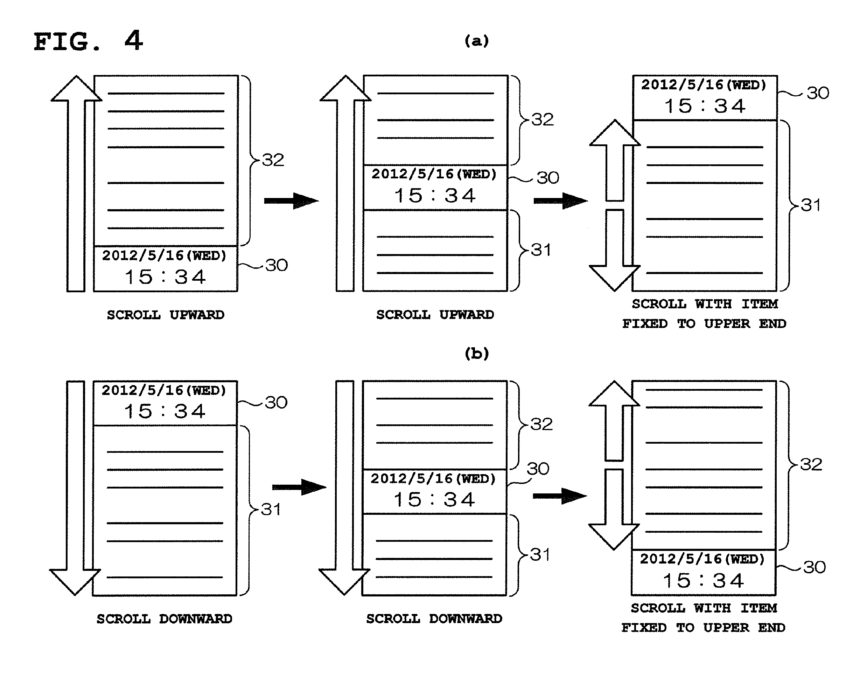

FIGs. 4(a) and 4(b) are schematic views illustrating one example of a screen relating to a scrolling operation (Steps S20 to S24 in FIG. 2) by the information processing device 1 according to the present embodiment. As illustrated in FIG. 4(a), when the user carries out a sliding operation (indicated by a white arrow) upward from below in a state where the current time display column 30 is displayed on the lower end of the screen and the future items 32 is displayed on the upper side of the current time display column 30 (left side in the drawing), an upward scrolling operation is executed by using the entire screen, such that the respective items is shifted in conjunction with one another in a state where the past items 31 are arranged on the lower side of the current time display column 30 and the future items 32 are arranged on the upper side thereof respectively in chronological sequence (in the center of the drawing).

Moreover, when the current time display column 30 has reached the upper end, the past items 31 are scrolled vertically in chronological sequence within the display region except for the current time display column 30, in a state where the current time display column 30 is fixed to the upper end (right side of the drawing). Furthermore, when, in a state where the current time display column 30 is fixed to the upper end, the upper end of the past items 31 has reached the lower end of the current time display column 30 (when all the past items 31 have been scrolled downward) by carrying out a downward scrolling operation, the current time display column 30 is again scrolled such that the entire portion is shifted in conjunction with one another (states on the left side and in the center of FIG. 4(b), which will be described further below).

On the other hand, as illustrated in FIG. 4(b), when the user carries out a sliding operation (indicated by a white arrow) downward from above in a state where the current time display column 30 is displayed on the upper end of the screen and the past items 31 is displayed on the lower side thereof (left side in the drawing), a downward scrolling operation is executed by using the entire screen, such that the respective items is shifted in conjunction with one another, in a state where the past items 31 are arranged on the lower side of the current time display column 30 and the future items 32 are arranged on the upper side thereof respectively in chronological sequence (in the center of the drawing).

Moreover, when the current time display column 30 has reached the lower end, the future items 32 are scrolled vertically in chronological sequence within the display region except for the current time display column 30, in a state where the current time display column 30 is fixed to the lower end (right side of the drawing). Furthermore, when, in a state where the current time display column 30 is fixed to the lower end, the lower end of the future items 32 has reached the upper end of the current time display column 30 (when all the future items 32 have been scrolled downward) by carrying out an upward scrolling operation, the current time display column 30 is again scrolled, such that the entire portion is shifted in conjunction with one another (states on the left side and in the center of FIG. 4(a)).

As described above, in the present embodiment, scroll processing is controlled such that the current time display column 30 representing the current time is left on the screen, no matter how much scroll processing is carried out. That is, in the case when the current time display column 30 has reached the upper end or the lower end of the screen, the current time display column 30 is fixed to the corresponding position, with the past items 31 or the future items 32 being scrolled within a display region other than the region.

Additionally, at any time when after tapping the current time display column 30, a scrolling operation is carried out, the scrolling operation may be executed after items on the periphery of the current time have been displayed.

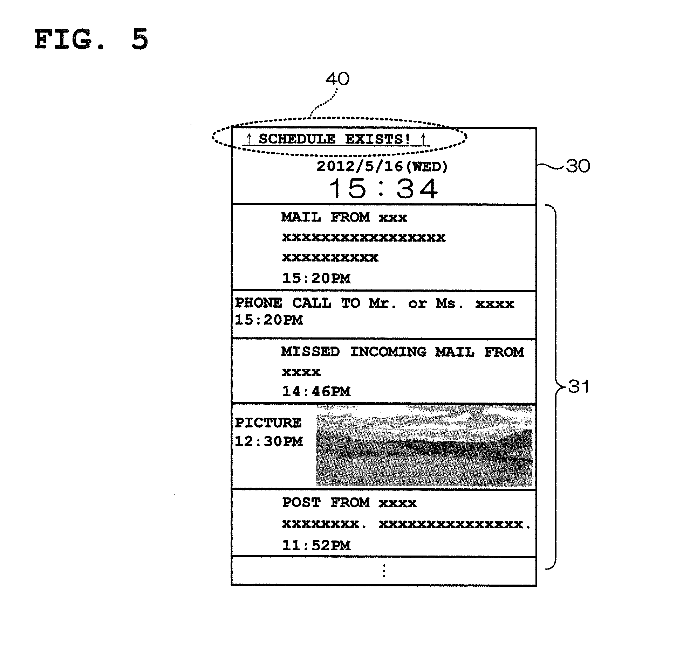

FIG. 5 is a schematic view illustrating one example of a screen at the time of informing a future item (Step S28 in FIG. 2) in the information processing device 1 according to the present embodiment. As illustrated in FIG. 5, in the case when, with the current time display column 30 being fixed to the upper end, a future item exists within a predetermined time range from the current time, a message 40 indicating that the future item exists is displayed in the display region of the current time display column 30. As described above, in the case when the current time display column 30 is fixed to the upper end of the display screen, the past items 31 arranged in chronological sequence and displayed in a display region except for the current time display column 30 are scrolled; therefore, even if there is a future item 32, it is not displayed on the screen of the display section 13. Therefore, by displaying the message 40 indicating that a future item 32 exists in the display region of the current time display column 30, the user is allowed to recognize that the future item 32 exists.

Additionally, in addition to the message 40 indicating that the future item 32 exists, time and date information associated with the closest future item 32 may be displayed. Moreover, in this case, if the future item 32 relates to the user himself or herself, the corresponding future item 32 may be displayed to the left side; while, if the future item 32 relates to a person other than the user, or if the future item 32 is a general item, the corresponding future item 32 may be displayed to the right side.

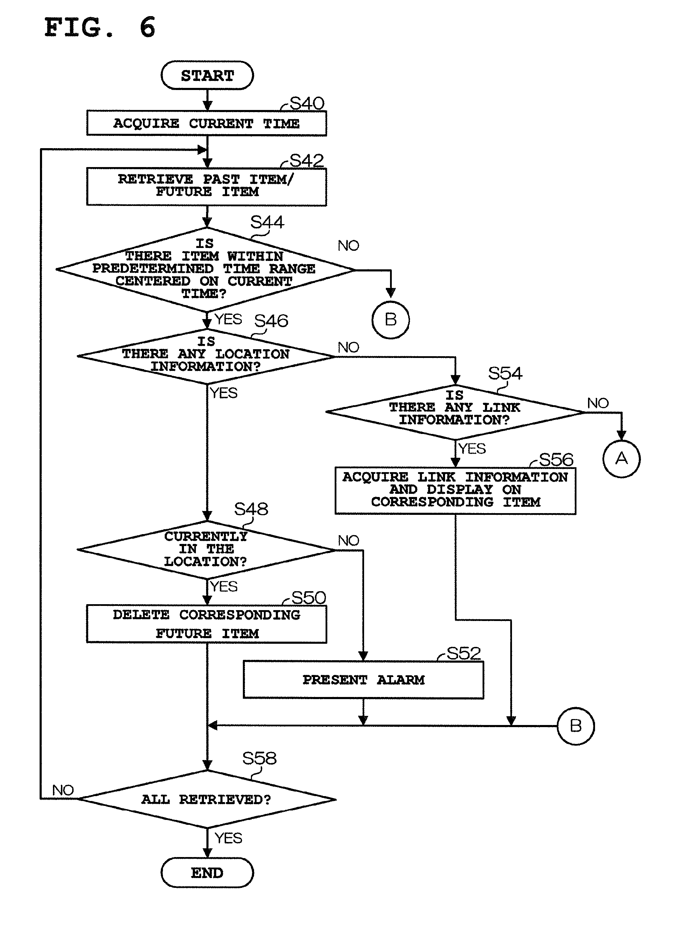

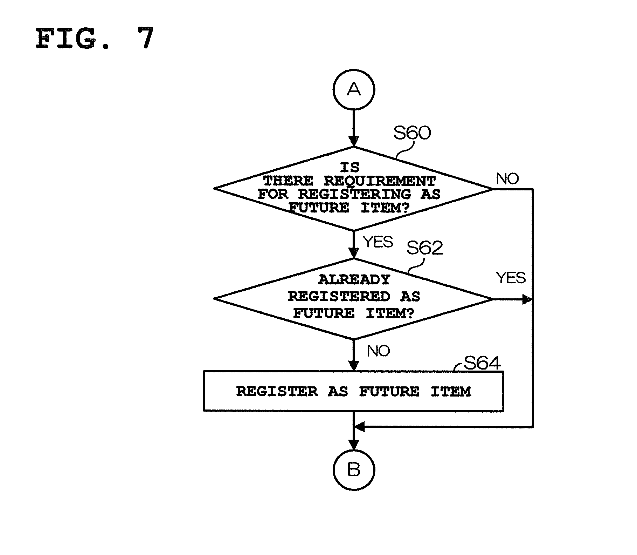

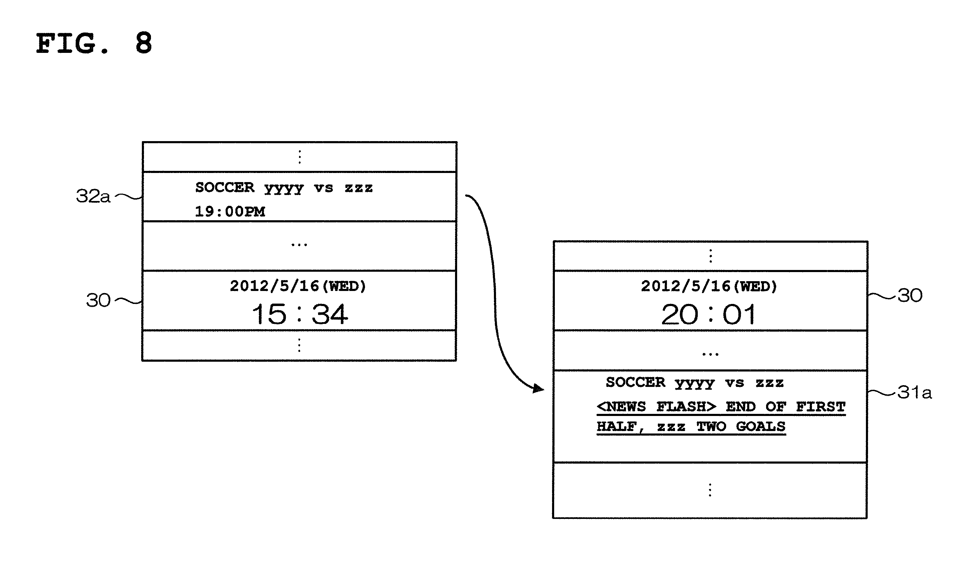

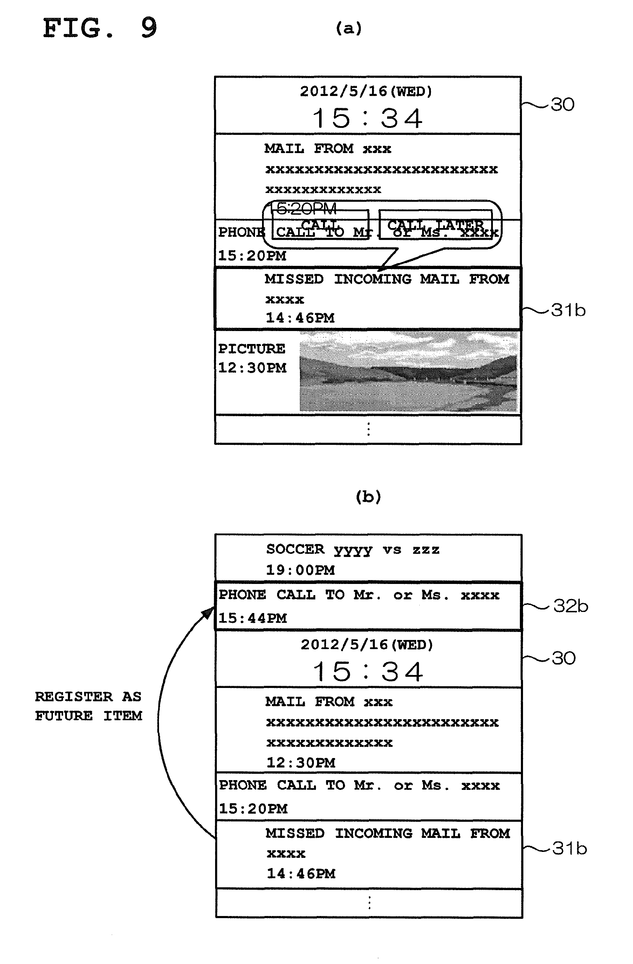

FIGs. 6 and 7 illustrate flowcharts to describe the item managing operations in the information processing device 1 according to the present embodiment. Moreover, FIGs. 8 and 9 are schematic views illustrating one example of a screen at the time of the item managing operations in the information processing device 1 according to the present embodiment. The flowchart illustrated in FIGs. 6 and 7 may be executed in parallel with the processes of the flowchart illustrated in FIG. 2 at predetermined time intervals, or may be executed at a predetermined timing as a sub-routine of the flowchart illustrated in FIG. 2.

First, the control section 16 acquires the current time from the RTC 15 (Step S40). Next, the control section 16 retrieves the past items 31 and the future items 32 (Step S42), and judges whether or not there is a corresponding item exists within a predetermined time range centered on the current time (Step S44). That is, the control section 16 judges whether or not there is a future item 32 having the current time reached its scheduled time (or its scheduled period) associated with the future item 32, or whether or not there is a past item 31 having its associated time passed through the current time.

Moreover, in the case when there is no corresponding item within the predetermined time range centered on the current time (NO in Step S44), the control section 16 judges whether or not all the items have been retrieved (Step S58), and if there is any item that has not been retrieved (NO in Step S58), the control section 16 returns to Step S42, repeating the same processing.

On the other hand, if there is any corresponding item in the predetermined time range centered on the current time (YES in Step S44), the control section 16 judges whether or not any location information is incorporated in the corresponding item (Step S46). Moreover, in the case when location information is incorporated in the corresponding item (YES in Step S46), the control section 16 judges whether or not the user is currently in the location (Step S48). In the case when the user is currently in the location (YES in Step S48), the control section 16 judges that the schedule of the corresponding item will be completed, the control section 16 deletes the corresponding item (Step S50). Thereafter, the control section 16 judges whether or not all the items have been retrieved (Step S58); and, if there is any item that has not been retrieved (NO in Step S58), the control section 16 returns to Step S42, repeating the same processing.

On the other hand, in the case when the user is not currently in the location (NO in Step S48), the control section 16 judges that the schedule of the corresponding item has not been completed, and gives an alarm to the user (gives an alarm sound, drives a vibrator, or the like), with the corresponding item being left (Step S52). Thereafter, the control section 16 judges whether or not all the items have been retrieved (Step S58); and, in the case when there is any item that has not been retrieved (NO in Step S58), the control section 16 returns to Step S42, repeating the same processing.

For example, it is assumed that time and date of an appointment for meeting an acquaintance and a location for the meeting are registered as one of future items 32. That is, location information is incorporated in the future item 32. In this case, when the current time has reached the time and date associated with the future item 32, if the user is actually in the meeting location, the control section 16 judges that the meeting appointment is satisfied (has been satisfied), and the corresponding future item 32 is deleted. On the other hand, in the case when the user is not in the location, the control section 16 judges that the meeting appointment is not satisfied, and gives an alarm to the user, with the future item 32 being left.

Alternatively, various specifications may be proposed. For example, in the case when the user is in the location, the future item 32 is left as a past item 31; while, in the case when the user is not in the location, the future item 32 is deleted. Note that the current position can be known based on positional information acquired by using GPS (Global Positioning System) or based on positional information derived from a relay station of a communication system, or the like.

On the other hand, in the case when the corresponding item exists within the predetermined time range centered on the current time (YES in Step S44), but no location information is incorporated in the corresponding item (NO in Step S46), the control section 16 judges whether or not any link information (information relating to information source; URL or the like) is incorporated in the corresponding item (Step S54). In the case when link information is incorporated in the corresponding item (YES in Step S54), the control section 16 acquires the link information and displays on the display column of the corresponding item (Step S56).

For example, it is assumed that the release date/starting date of a commodity/service or an event to which the user pays attention has been registered as a future item 32; and, in the case when the current time has reached the period associated with the future item 32, a link to the latest news relating to the commodity/service or event may be presented. In this case, the link may be presented at a point of time when the related function (browser application or the like) has detected the latest news. Moreover, the number of the links to be presented is not limited to one, and a plurality of links may be presented.

FIG. 8 illustrates a state where a soccer game (yyy vs zzz, 19:00 PM) has been registered as one of future items 32; and, when the current time has reached (or passed) the time and date associated with the future item 32a, the future item 32a is converted to a past item 31a, and the latest news (<news flash> end of the first half, zzz two goals) relating to the soccer game are acquired through the network or the like and displayed. Note that, in practice, the future item 32a automatically becomes the past item 31a by updating the insertion position of the current time display item 30 in accordance with the current time, whereby the corresponding future item 32a may be left.

Thereafter, the control section 16 judges whether or not all the items have been retrieved (Step S58); and, in the case when there is any item that has not been retrieved (NO in Step S58), the control section 16 returns to Step S42, repeating the same processing. In the case when all the items have been retrieved, the control section 16 ends the processing

On the other hand, in the case when there is a corresponding item within the predetermined time range centered on the current time (YES in Step S44), but neither location information (NO in Step S46) nor link information (NO in Step S54) exists, the control section 16 judges whether or not the corresponding item needs to be registered as a future item 32 (Step S60 in FIG. 7). The item that needs to be registered as a future item 32 refers to such an item as to require a response from the recipient side, such as a missed incoming call or an incoming mail.

Moreover, in the case when there is any item that needs to be registered as the future item 32, such as a missed incoming call or an incoming mail (YES in Step S60), the control section 16 judges whether or not the corresponding item has already been registered as a future item 32 (Step S62). Furthermore, in the case when the corresponding item has not been registered as a future item 32 (NO in Step S62), the corresponding item is registered as a future item 32 (Step S64) so as to prevent the user from forgetting. Additionally, whether or not the registration is required may be automatically determined in accordance with the kinds of items (missed incoming call, incoming mail or the like), but not limited thereto. It may be selected by the user. Thereafter, it judges whether or not all the items have been retrieved (Step S58), and in the case when there is any item that has not been retrieved (NO in Step S58), the control section 16 returns to Step S42, repeating the same processing. In contrast, in the case when all the items have been retrieved, the control section 16 ends the processing.

For example, in the case when there is a missed incoming call, the fact that the missed incoming call exists is registered together with its time information. As illustrated in FIG. 9(a), this item is displayed as a past item 31b (missed incoming call, from xxxx, 14:46 PM) in accordance with an elapse of time. The example illustrated in the drawing shows the case where the user is allowed to select which of calling right now and calling later with respect to the past item 31b, that is, options, such as "calling" and "calling later", are displayed by using a pop-up window or the like. When the user selects (touches) "calling", the control section 16 immediately proceeds to a calling process, without the registration as the future item 32b. In contrast, when the user selects (touches) "calling later", a future item 32b, such as "phone call to Mr. or Ms. xxxx, 15:44 PM", for reminding the user to call the partner later, is registered so as to prevent the user from forgetting, as illustrated in FIG. 9(b).

In this case, the time of the future item 32b may be given as a fixed value (for example, 10 minutes later) from the current time, or may be given as a plurality of fixed values (10 minutes later, 20 minutes later and 30 minutes later) so as to be selected. Moreover, the time of the future item 32b may be optionally set by the user.

Additionally, upon completion of the registration setting, such an animation as to allow an image indicating the corresponding future item 32b to shift from the position of the past item 31b to a position where the corresponding future item 32b is displayed may be displayed.

Moreover, with respect to the item that needs to be registered, not limited to the future item for calling, any item may be used as long as it is a future item relating to a past item, such as a future item for reading a received message later, a future item for writing a response to a received message or a future item for posting a photographed picture later.

Furthermore, after registering the future item 32b as described above, when an operation (scrolling) for displaying the corresponding future item 32b is first carried out, the display position may directly jump to the position of the corresponding future item 32b. Thereafter, upon scrolling in the opposite direction, the display position may directly return to the position of the current position display column 30 for displaying the current time.

Additionally, after registering the future item 32b as described above, when an operation (scrolling) for displaying the corresponding future item 32b is carried out within a predetermined period of time, the display position may directly jump to the position of the corresponding future item 32b.

According to the present embodiment, future items and past items with each of which a piece of time information is associated are arranged and presented in chronological sequence such that the future item and the past item are divided on the upper and lower sides of a current time display column indicating the current time, based on the respective pieces of time information; and, when any prompt for controlling these future item and past item is detected, the way of registering, deleting, shifting, editing and presenting the future and past items are controlled. As a result, the past item and the future item are browsed at one time, with the current time being recognized. Additionally, the future item and the past item can be appropriately processed at the predetermined prompt. Accordingly, the convenience of the item management can be improved.

Moreover, according to the present embodiment, the fact that the current time has reached the time corresponding to any of time information of the future items is used as a prompt for controlling the future item and the past item, whereby the future item and past item can be processed at an appropriate point of time. Accordingly, the convenience of item managements can be improved.

Furthermore, according to the present embodiment, a specific past item is registered as a future item to be carried out after a predetermined period of time, whereby a user can utilize as a memorandum for preventing the user from forgetting.

Still further, according to the present embodiment, in the case when a future item exists within a predetermined period of time from the current time in a state where the current time display column and past items are presented, this fact is presented; therefore, even in the case when no future item is presented, the user is allowed to recognize the fact that there is a future item.

Yet still further, according to the present embodiment, the future items and the past items are arranged and displayed in chronological sequence such that the future items and the past items are divided on the upper and lower sides of the current time display column based on the respective pieces of time information. When a scrolling operation is carried out by the user, the current time display column, the past items and the future items are scrolled on the screen and displayed thereon in a state where the current time display column, and the past items and the future items displayed in the divided manner on the upper and lower sides of the current time display column are arranged in chronological sequence; and, in the case when the current time display column has reached the end of the screen, the current time display column is kept at the end of the screen, and the past items and/or future items other than the current time display column are scrolled, whereby the current time display column is always left on the screen. Accordingly, the past items and future items can be easily browsed with the current time being recognized.

Note that, in the present embodiment, the current time display column, the past items and the future items are displayed in a state where the current time display column, and the past items and the future items displayed in the divided manner on the upper and lower sides of the current time display column are arranged in chronological sequence, but not limited thereto. They may be displayed on the right and left sides or may be displayed diagonally. In other words, the past items and the future items may be displayed such that the past items and the future items are arranged in chronological sequence on respective regions divided by using the current time display column as a border.

Also, note that, the above-described embodiment may be widely applied to devices, such as a digital camera in which photographed images are managed in association with photographed time and date, a mobile phone, a smart phone, a PDA, a tablet terminal, a personal computer, communication equipment, other electronic devices and the like in which schedules and the like are managed, as long as they are devices for processing information that can be managed in chronological sequence.

This application is based upon and claims the benefit of priority from the prior Japanese Patent Application No. 2012-232692 filed on October 22, 2012, the entire contents of which are incorporated herein by reference.

Hereinafter, the characteristics of the present invention will be additionally described.

A part or all of the above-described embodiment can be described as in the following Supplementary Notes; however, the embodiment is not limited to these Supplementary Notes.

### (Supplementary Note 1)

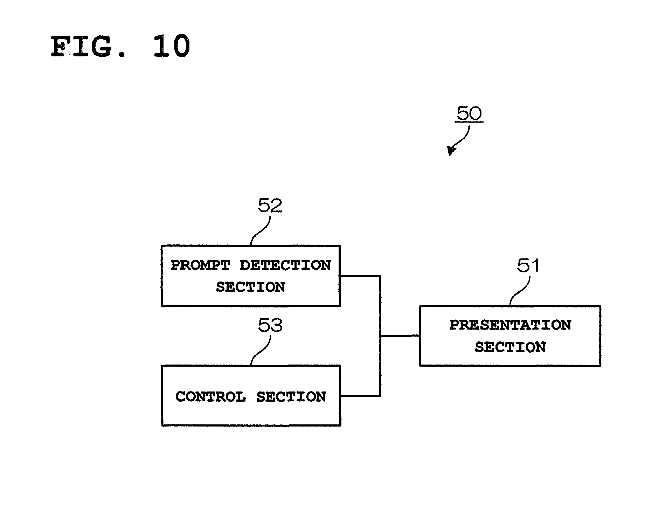

FIG. 10 is a configuration diagram of Supplementary Note 1. Note that the relationship between FIG. 10 and FIG. 1 will be described. A presentation section 51 illustrated in FIG. 10 corresponds to a display section 13 of FIG. 1; a prompt detection section 52 of FIG. 10 corresponds to one function of a control section 16 of FIG. 1; and a control section 53 of FIG. 10 corresponds to one function of the control section 16 of FIG. 1.

As illustrated in these drawings, an invention of Supplementary Note 1 is an information terminal device 50 comprising: a presentation section 51 for arranging and presenting future items and past items with each of which a piece of time information is associated in chronological sequence on respective regions divided by using a current time display column indicating a current time as a border, based on the respective pieces of time information; a prompt detection section 52 for detecting a prompt for controlling the future items and the past items; and a control section 53 for controlling a way of registering, deleting, shifting, editing and presenting the future items and the past items when a prompt is detected by the prompt detection section.

### (Supplementary Note 2)

The information terminal device according to Supplementary Note 1, wherein the prompt detection section detects a fact that the current time acquired from the time counting section has reached a time corresponding to any one of the pieces of time information of the future items, as a prompt for controlling the future items and the past items.

### (Supplementary Note 3)

The information terminal device according to Supplementary Note 1 or 2, wherein the control section registers a specific past item as a future item to be carried out after a predetermined period of time.

### (Supplementary Note 4)

The information terminal device according to any one of Supplementary Notes 1 to 3, wherein, in the case when a future item exists within a predetermined period of time from the current time in a state where the current time display column and the past items are presented by the presentation section, the control section presents a fact that the future item exists within the predetermined period of time from the current time.

### (Supplementary Note 5)

The information terminal device according to any one of Supplementary Notes 1 to 4 is characterized by further comprising: a display section; and an operating section for receiving a user's operation, wherein the presentation section arranges the past items and the future items in chronological sequence on respective regions divided by using the current time display column as the border, based on the respective pieces of time information, and displays on the display section; and, when a scrolling operation is carried out by the user through the operating section, causes the current time display column, and the past items and the future items displayed on the respective divided regions to be scrolled and displayed on a screen of the display section in a state where the current time display column, the past items and the future items are arranged in chronological sequence, and wherein, in the case when, upon displaying the past items and the future items on the display section, the current time display column has reached an end of the screen of the display section by being scrolled and displayed, the control section keeps the current time display column at the end of the screen, while allowing the past items and/or future items other than the current time display column to be scrolled, whereby the current time display column is always left on the screen.

### (Supplementary Note 6)

A chronological information managing method comprising: a step of arranging and presenting future items and past items with each of which a piece of time information is associated in chronological sequence on respective regions divided by using a current time display column indicating a current time as a border, based on the respective pieces of time information; a step of detecting a prompt for controlling the future items and the past items; and a step of controlling a way of registering, deleting, shifting, editing and presenting the future items and the past items when the prompt is detected.

### (Supplementary Note 7)

A program that causes a computer to actualize functions comprising: a presenting function for arranging and presenting future items and past items with each of which a piece of time information is associated in chronological sequence on respective regions divided by using a current time display column indicating a current time as a border, based on the respective pieces of time information; a prompt detecting function for detecting a prompt for controlling the future items and the past items; and a controlling function to control a way of registering, deleting, shifting, editing and presenting the future items and the past items when the prompt is detected.

### (Supplementary Note 8)

The information terminal device according to any one of Supplementary Notes 1 to 6, wherein, upon presenting future items and past items, the presentation section presents past items and future items relating to the user himself or herself, and past items and future items relating persons other than the user in a divided manner.

### DESCRIPTION OF REFERENCE NUMERALS

- 1, 50: information processing device
- 10: communication section
- 11: photographing section
- 12: memory
- 13: display section
- 14: operating section
- 15: RTC
- 16: control section
- 51: presentation section
- 52: prompt detection section
- 53: control section

## Claims

1. An information terminal device comprising:
a presentation section for arranging and presenting future items and past items with each of which a piece of time information is associated in chronological sequence on respective regions divided by using a current time display column indicating a current time as a border, based on the respective pieces of time information;
a prompt detection section for detecting a prompt for controlling the future items and the past items; and
a control section for controlling a way of registering, deleting, shifting, editing and presenting the future items and the past items when a prompt is detected by the prompt detection section.

2. The information terminal device according to claim 1, wherein the prompt detection section detects a fact that the current time acquired from the time counting section has reached a time corresponding to any one of the pieces of time information of the future items, as a prompt for controlling the future items and the past items.

3. The information terminal device according to claim 1 or 2, wherein the control section registers a specific past item as a future item to be carried out after a predetermined period of time.

4. The information terminal device according to any one of claims 1 to 3, wherein, in the case when a future item exists within a predetermined period of time from the current time in a state where the current time display column and the past items are presented by the presentation section, the control section presents a fact that the future item exists within the predetermined period of time from the current time.

5. The information terminal device according to any one of claims 1 to 4 further comprising:
a display section; and
an operating section for receiving a user's operation,
wherein the presentation section arranges the past items and the future items in chronological sequence on respective regions divided by using the current time display column as the border, based on the respective pieces of time information, and displays on the display section; and, when a scrolling operation is carried out by the user through the operating section, causes the current time display column, and the past items and the future items displayed on the respective divided regions to be scrolled and displayed on a screen of the display section in a state where the current time display column, the past items and the future items are arranged in chronological sequence, and
wherein, in the case when, upon displaying the past items and the future items on the display section, the current time display column has reached an end of the screen of the display section by being scrolled and displayed, the control section keeps the current time display column at the end of the screen, while allowing the past items and/or future items other than the current time display column to be scrolled, whereby the current time display column is always left on the screen.

6. A chronological information managing method comprising:
a step of arranging and presenting future items and past items with each of which a piece of time information is associated in chronological sequence on respective regions divided by using a current time display column indicating a current time as a border, based on the respective pieces of time information;
a step of detecting a prompt for controlling the future items and the past items; and
a step of controlling a way of registering, deleting, shifting, editing and presenting the future items and the past items when the prompt is detected.

7. A program that causes a computer to actualize functions comprising:
a presenting function for arranging and presenting future items and past items with each of which a piece of time information is associated in chronological sequence on respective regions divided by using a current time display column indicating a current time as a border, based on the respective pieces of time information;
a prompt detecting function for detecting a prompt for controlling the future items and the past items; and
a controlling function to control a way of registering, deleting, shifting, editing and presenting the future items and the past items when the prompt is detected.
